(19) Europäisches Patentamt
European Patent Office
Office européen des brevets

(11) Publication number: 0 036 679 A1

(12) **EUROPEAN PATENT APPLICATION**

(21) Application number: 81200222.8

(22) Date of filing: 24.02.81

(51) Int. Cl.³: **A 01 N 47/30** // (A01N47/30, 43/70)

(30) Priority: 11.03.80 GB 8008224

(43) Date of publication of application: 30.09.81 Bulletin 81/39

(84) Designated Contracting States: AT BE DE FR GB IT NL SE

(71) Applicant: SHELL INTERNATIONALE RESEARCH MAATSCHAPPIJ B.V., Carel van Bylandtlaan 30, NL-2596 HR DEN HAAG (NL)

(72) Inventor: Raven, Clive Alan, Sheralee Wrens Road, Tunstall Sittingbourne Kent (GB)
Inventor: Swainson, Gillian, 7 Manwood Close, Sittingbourne Kent (GB)

(74) Representative: Keuzenkamp, Abraham et al, P.O. Box 302, NL-2501 CH Den Haag (NL)

(54) **Herbicidal composition and method of combating undesired plant growth.**

(57) A herbicidal composition which comprises a compound of the general formula

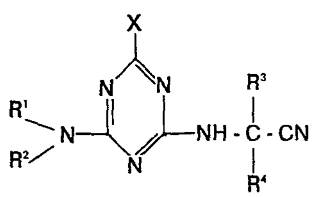

(I)

in which X represents a halogen atom, an alkoxy or alkylthio group, an $N_3$ group or a group of formula $NR^5R^6$; each of $R^1$ and $R^2$ independently represents a hydrogen atom or an aralkyl, alkyl or alkenyl group optionally substituted by one or more of the same or different substituents selected from hydroxy, alkoxy, alkylthio and cyano groups; each of $R^3$ and $R^4$ independently represents an alkyl, alkenyl or aralkyl group, or $R^3$ and $R^4$ together represent an alkylene group; and each of $R^5$ and $R^6$ independently has one of the meanings given for $R^1$ and $R^2$; together with a compound of the general formula

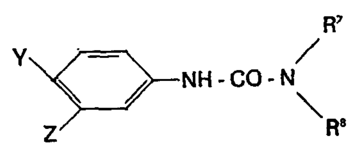

(II)

in which Y represents an alkyl group; Z represents a hydrogen or a halogen atom; $R^7$ represents a hydrogen atom or an alkyl or alkoxy group; and $R^8$ represents an alkyl group.

EP 0 036 679 A1

"Herbicidal Composition and Method of Combating Undesired Plant Growth"

This invention relates to herbicidal compositions and method of combating undesired plant growth.

UK Patent Specification No.1,132,306 discloses that certain triazine compounds are useful as herbicides. Especially useful is the compound 2-chloro-4-(1-cyano-1-methylethylamino)-6-ethylamino-1,3,5-triazine, which has the proprietary name cyanazine. It combines a good pre- and post emergence effect on very many broad leaved weeds with some useful control of grasses. It is used as a selective herbicide in many crops, for example cereals such as wheat, barley and maize, and vegetables such as peas and broad beans.

US Patent Specification No.2,655,447 discloses that certain urea derivatives are also useful as herbicides. Many of these ureas have been commercialized. For example, the compounds 3-(4-isopropylphenyl)-1,1-dimethylurea, proprietary name isoproturon, and 3-(3-chloro-4-methylphenyl)-1,1-dimethylurea, proprietary name chlortoluron, are used as pre- and post-emergence herbicides for the control of grass weeds in crops, including cereals. Their activity against broad-leaved weeds is relatively weak.

The Applicants have now found that certain mixtures of triazines with ureas exhibit an unexpected synergistic effect.

The invention provides a herbicidal composition which comprises a compound of the general formula

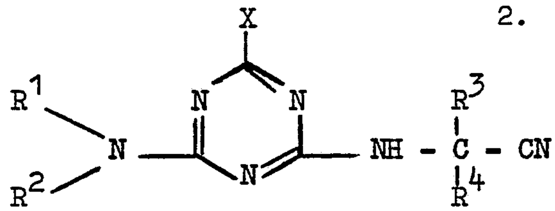

(I)

in which X represents a halogen atom, an alkoxy or alkythio group, an $N_3$ group or a group of formula $NR^5R^6$; each of $R^1$ and $R^2$ independently represents a hydrogen atom or an aralkyl, alkyl or alkenyl group optionally substituted by one or more of the same or different substituents selected from hydroxy, alkoxy, alkylthio and cyano groups; each of $R^3$ and $R^4$ independently represents an alkyl, alkenyl or aralkyl group, or $R^3$ and $R^4$ together represent an alkylene group; and each of $R^5$ and $R^6$ independently has one of the meanings given for $R^1$ and $R^2$; together with a compound of the general formula

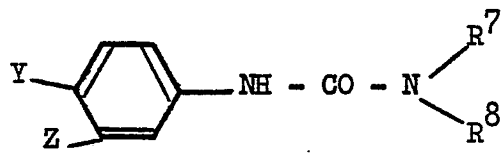

(II)

in which Y represents an alkyl group; Z represents a hydrogen or a halogen atom; $R^7$ represents a hydrogen atom or an alkyl or alkoxy group; and $R^8$ represents an alkyl group.

The invention further provides a method of combating undesired plant growth at a locus, which comprises applying to the locus a compound of the general I and a compound of the general formula II.

Unless otherwise stated, any alkyl, alkoxy, alkylthio or alkenyl group referred to above in the general formulae I and II preferably has up to 6, especially up to 4, carbon atoms. Any aralkyl group is preferably a phenalkyl, especially benzyl, group, and any alkylene group preferably has from 5 to 7 carbon atoms.

In the general formula I, preferably X represents a halogen, especially chlorine, atom or a methylthio group. Preferably $R^1$

represents a hydrogen atom or a methyl, ethyl or isopropyl group. Preferably $R^2$ represents a methyl, ethyl or isopropyl group. Preferably each of $R^3$ and $R^4$ independently represents a methyl or ethyl group.

An especially preferred compound of the general formula I is the compound in which X represents a chlorine atom, $R^1$ represents a hydrogen atom, $R^2$ represents an ethyl group, and each of $R^3$ and $R^4$ represents a methyl group.

In the general formula II, preferably Y represents a methyl, ethyl or isopropyl group. Preferably Z represents a chlorine or hydrogen atom. Preferably $R^7$ represents a hydrogen, methyl or methoxy group. Preferably $R^8$ represents a methyl group.

Especially prefered compounds of the general formula II are those in which each of $R^7$ and $R^8$ represents a methyl group, and either Y represents an isopropyl group and Z represents a hydrogen atom, or Y represents a methyl group and Z represents a chlorine atom.

The weight ratio of the compound of the general formula I to the compound of general formula II may vary widely depending on the intended application. Preferably said ratio is in the range of from 1:50 to 50:1, preferably 1:20 to 20:1, especially 3:1 to 1:5. Suitably the dosage of each compound applied is in the range of from 0.1 to 4 kg/ha. For example, a dosage of 0.1 to 1 kg/ha of the compound of formula I may be applied together with 0.1 to 4 kg/ha of the compound of formula II.

The composition and method of the invention may be used for the control of weeds in a wide variety of crops, for example, cotton, soyabean, plantation crops such as sugar cane or vines, and, especially, cereals such as wheat, barley, maize and sorghum. A wide range of broad leaved and grassy weeds are controlled. Application may be pre-emergence or post-emergence, especially pre- or early post-emergence. For certain applications, especially when resistant weeds are present, it may be desirable also to apply a third herbicide. For example, if severe infestations of wild oat are present in cereal crops, it may be advantageous

to apply along with the compounds of formulae I and II, one of the N,N-disubstituted alanine derivatives described in UK Patent No.1,164,160, for example the racemic mixture or laevo rotatory isomer of the ethyl ester of N-benzoyl-N-(3,4-dichlorophenyl)-2-aminopropionic acid, or the methyl or isopropyl ester of N-benzoyl-N-(3-chloro-4-fluorophenyl)-2-aminopropionic acid. If a very rapid action on resistant broad-leaved weeds in required, one or more of the compounds 3-isopropyl-(1H)-benzo-2,1,3-thiadiazin-4-one 2,2-dioxide (proprietary name bentazone), 3,5-dibromo-4-hydroxybenzonitrile (proprietary name bromoxynil) or 3,5-diiodo-4-hydroxybenzonitrile (proprietary name ioxynil), may be added. It may be desirable to add a hormone herbicide, for example 2-(2,4-dichlorophenoxy)propionic acid (proprietary name dichlorprop), 4-chloro-2-methylphenoxyacetic acid (proprietary name MCPA), or 2-(4-chloro-2-methylphenoxy)propionic acid (proprietary name mecoprop), for additional control of certain broad-leaved weeds such as gallium.

A composition according to the invention preferably also comprises one or more carriers. A carrier is any material with which the active ingredients are formulated to facilitate application to the locus to be treated, or to facilitate storage, transport or handling. A carrier may be a solid or a liquid, including a material which is normally gaseous but which has been compressed to form a liquid, and any of the carriers normally used in formulating herbicidal compositions may be used.

Suitable solid carriers include natural and synthetic clays and silicates, for example natural silicas such as diatomaceous earths; magnesium silicates, for example talcs; magnesium aluminium silicates, for example attapulgites and vermiculites; aluminium silicates, for example kaolinites, montmorillonites and micas; calcium carbonate; calcium sulphate; synthetic hydrated silicon oxides and synthetic calcium or aluminium silicates; elements, for example carbon and sulphur; natural and synthetic resins, for example coumarone resins, polyvinyl chloride, and styrene polymers and copolymers; solid polychlorophenols; bitumen;

waxes, for example beeswax, paraffin wax, and chlorinated mineral waxes; and solid fertlisers, for example superphosphates.

Suitable liquid carriers include water; alcohols, for example isopropanol and glycols; for example acetone, methyl ethyl ketone, methyl isobutyl ketone and cyclohexanone; ethers; aromatic or araliphatic hydrocarbons, for example benzene, toluene and xylene; petroleum fractions, for example kerosine and light mineral oils; chlorinated hydrocarbons, for example carbon tetrachloride, perchloroethylene and trichloroethane. Mixtures of different liquids are often suitable.

Agricultural compositions are often formulated and transported in a concentrated form which is subsequently diluted by the user before application. The presence of small amounts of a carrier which is a surface-active agent facilitates this process of dilution.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenols, for example p-octylphenol or p-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as sodium dodecylbenzene sulphonate; and polymers of ethylene oxide and copolymers of ethylene oxide and propylene oxide.

The compositions of the invention may for example be formulated as wettable powders, dusts, granules, solutions, emulsifiable concentrates, emulsions, suspension concentrates and aerosols. Wettable powders usually contain 25, 50 and 75% w of active ingredient and usually contain, in addition to solid inert carrier, 3-10% w of a dispersing agent and, where necessary, 0-10% w of stabiliser(s) and/or other additives such as penetrants or stickers. Dusts are usually formulated as a dust concentrate having a similar compositions to that of a wettable powder but without a dispersant, and are diluted in the field with further solid carrier to give a composition usually containing ½-10% w of active ingredient. Granules are usually prepared to have a size between 10 and 100 BS mesh (1.676 - 0.152 mm), and may be manufactured by agglomeration or impregnation techniques. Generally, granules will contain ½-25% w active ingredient and 0-10% w of additives such as stabilisers, slow release modifiers and binding agents. Emulsifiable concentrates usually contain, in addition to a solvent and, when necessary, co-solvent, 10-50% w/v active ingredient, 2-20% w/v emulsifiers and 0-20% w/v of other additives such as stabilisers, penetrants and corrosion inhibitors. Suspension concentrates are usually compounded so as to obtain a stable, non-sedimenting flowable product and usually contain 10-75% w active ingredient, 0.5-15% w of dispersing agents, 0.1-10% w of suspending agents such as protective colloids and thixotropic agents, 0-10% w of other additives such as defoamers, corrosion inhibitors, stabilisers, penetrants and stickers, and water or an organic liquid in which the active ingredient is substantially insoluble; certain organic solids or inorganic salts may be present dissolved in the formulation to assist in preventing sedimentation or as anti-freeze agents for water.

Aqueous dispersions and emulsions, for example compositions obtained by diluting a wettable powder or a concentrate according to the invention with water, also lie within the scope of the present invention. The said emulsions may be of the water-in-oil or of the oil-in-water type, and may have a thick 'mayonnaise'-like consistency.

The compositions of the invention may also contain other ingredients, for example, compounds possessing insecticidal or fungicidal properties.

The following Examples illustrate the invention.

Example 1 Synergistic Effect of Cyanazine/Chlortoluron Mixtures on Blackgrass

Seeds of blackgrass, *Alopecurus myosuroides*, were sown in sterilized loam in 70 mm diameter pots, and watered overhead until emergence and then by sub-irrigation on capilliary matting.

After sowing the seeds the soil in each pot was sprayed with an aqueous solution of the test compound or mixture in a volume equivalent to 650 litres/ha. Each compound or mixture was applied at three dose levels and there were three replicate pots for each treatment. Within each dose level, the dosages of the active ingredients were calculated using formulae (i) and (ii) below, which assume that the compounds will act additively. Thus if the compounds do in fact act additively, similar levels of phytotoxicity should be obtained in all treatments. This makes accurate comparision of the treated plants possible.

$$\text{dosage of B} = \frac{a}{\alpha + \frac{a}{b}} \qquad \text{(i)}$$

$$\text{dosage of A} = \text{dosage of B} \times \alpha \qquad \text{(ii)}$$

in which a = dosage for compound A applied alone

b = dosage for compound B applied alone

$\alpha$ = weight ratio of compound A to compound B in mixture.

The dosages used were as follows, the figures being given in Kg/ha. A refers to cyanazine, and B to chlortoluron.

| Ratio B:A | Dose level 1 | | Dose level 2 | | Dose level 3 | |
|---|---|---|---|---|---|---|
| | B | A | B | A | B | A |
| 1:0 | 0.30 | - | 0.10 | - | 0.03 | - |
| 3:1 | 0.225 | 0.075 | 0.075 | 0.025 | 0.023 | 0.008 |
| 1:1 | 0.150 | 0.150 | 0.050 | 0.050 | 0.015 | 0.015 |
| 1:3 | 0.075 | 0.225 | 0.025 | 0.075 | 0.008 | 0.023 |
| 0:1 | - | 0.30 | - | 0.10 | - | 0.03 |

23 and 28 days after treatment, phytotoxicity compared with the untreated control, was assessed visually on a 0 to 9 scale, 0 indicating no effect and 9 indicating death. From these figures, analysis was carried out in two ways.

1) The mean percentage phytotoxicity over the three dosages was calculated.

2) The results were subjected to a standard probit analysis to calculate the dosage, in Kg/ha required to kill 50% of the test species. This dosage is referred to as the $GID_{50}$ dosage. If a mixture of herbicides A and B act together in an additive way, one would expect the $GID_{50}$ values for A and B to be given by the equations (i) and (ii) above where a and b are equal to the $GID_{50}$'s of A and B used alone.

If the measured $GID_{50}$ values are in fact less than the calculated values, the mixture is synergistic.

The results of the tests are given in the following Table.

**Table of Results: Example 1**

| Ratio B:A | % photoxicity | | Measured $GID_{50}$ Kg/ha Calculated values in brackets | | | |
|---|---|---|---|---|---|---|
| | 23 days | 28 days | 23 days | | 28 days | |
| | | | B | A | B | A |
| 1:0 | 17 | 24 | 0.36 | - | 0.26 | - |
| 3:1 | 28 | 33 | 0.18(0.24) | 0.06(0.08) | 0.15(0.18) | 0.05(0.06) |
| 1:1 | 23 | 33 | 0.14(0.15) | 0.14(0.15) | 0.09(0.11) | 0.09(0.11) |
| 1:3 | 33 | 43 | 0.05(0.07) | 0.14(0.20) | 0.03(0.05) | 0.10(0.15) |
| 0:1 | 25 | 33 | - | 0.25 | - | 0.19 |

It can be seen from the results that the mixture of cyanazine (A) and chlortoluron (B) is indeed synergistic.

Example 2    Effect of Cyanazine/chlortoluron Mixtures on Crops

The experimental technique described in Example 1 was repeated using wheat, Triticum vulgare variety Sappo, and barley Hordeum vulgare, variety Imber. The dosages used were very much higher than those used in the tests on blackgrass, so that reasonably high levels of phytotoxicity, susceptible to accurate assessment, were obtained. The dosages were as follows, the figures being given in Kg/ha. A refers to cyanzine, and B to chlortoluron.

| | Ratio B:A | Dose level 1 | | Dose level 2 | | Dose level 3 | |
|---|---|---|---|---|---|---|---|
| | | B | A | B | A | B | A |
| Wheat | 1:0 | 9.00 | - | 3.00 | - | 0.90 | - |
| | 6:1 | 6.00 | 1.00 | 2.00 | 0.33 | 0.60 | 0.10 |
| | 3:1 | 4.50 | 1.50 | 1.50 | 0.50 | 0.45 | 0.15 |
| | 1:1 | 2.25 | 2.25 | 0.75 | 0.75 | 0.225 | 0.225 |
| | 0:1 | - | 3.00 | - | 1.00 | - | 0.30 |
| Barley | 1:0 | 3.00 | - | 0.90 | - | 0.30 | - |
| | 9:1 | 2.25 | 0.25 | 0.675 | 0.075 | 0.225 | 0.025 |
| | 3:1 | 1.50 | 0.50 | 0.450 | 0.150 | 0.150 | 0.050 |
| | 1:1 | 0.75 | 0.75 | 0.225 | 0.225 | 0.075 | 0.075 |
| | 0:1 | - | 1.00 | - | 0.30 | - | 0.10 |

Visual assessments were made after 17 and after 23 days.

The data were analysed as described in Example 1, and the results are as follows.

Table of Results: Example 2

| | Ratio B:A | % phytotoxicity | | Measured $GID_{50}$ Kg/ha calculated values in brackets | | | |
|---|---|---|---|---|---|---|---|
| | | 17 days | 23 days | 17 days | | 23 days | |
| | | | | B | A | B | A |
| Wheat | 1:0 | 71 | 77 | 1.06 | - | 1.09 | - |
| | 6:1 | 61 | 74 | 1.14(0.60) | 0.19(0.10) | 0.78(0.43) | 0.13(0.07) |
| | 3:1 | 69 | 75 | 0.60(0.42) | 0.20(0.14) | 0.57(0.27) | 0.19(0.09) |
| | 1:1 | 67 | 78 | 0.33(0.19) | 0.33(0.19) | 0.26(0.11) | 0.26(0.11) |
| | 0:1 | 78 | 95 | - | 0.23 | - | 0.12 |
| Barley | 1:0 | 59 | 55 | 0.69 | - | 0.81 | - |
| | 9:1 | 51 | 54 | 0.72(0.56) | 0.08(0.06) | 0.67(0.59) | 0.07(0.07) |
| | 3:1 | 50 | 48 | 0.45(0.41) | 0.15(0.14) | 0.50(0.38) | 0.17(0.13) |
| | 1:1 | 41 | 50 | 0.33(0.22) | 0.33(0.22) | 0.24(0.19) | 0.24(0.19) |
| | 0:1 | 48 | 57 | - | 0.33 | - | 0.24 |

The results show that, to a marked extent on wheat and a somewhat smaller extent on barley, the mixtures of cyanazine and chlortoluron are less phytotoxic than the individual compounds.

Example 3 Synergistic Effect of Cyanazine/isoproturon mixtures on Blackgrass

The procedure of Example 1 was repeated using mixtures of cyanazine (referred to as A) and isoproturon (referred to as C) at the following dosages in Kg/ha

| Ratio C:A | Dose level 1 | | Dose level 2 | |
|---|---|---|---|---|
| | C | A | C | A |
| 1:0 | 0.60 | - | 0.18 | - |
| 1.5:1 | 0.45 | 0.30 | 0.135 | 0.09 |
| 1:2 | 0.30 | 0.60 | 0.09 | 0.18 |
| 1:6 | 0.15 | 0.90 | 0.045 | 0.27 |
| 0:1 | - | 1.20 | - | 0.36 |

The results obtained were as follows. Phytotoxicity was assessed 13 days after treatment.

Table of Results: Example 3

| Ratio C:A | % Phytotoxicity | Measured $GID_{50}$ Kg/ha calculated values in brackets | |
|---|---|---|---|
| | | C | A |
| 1:0 | 48 | 0.32 | - |
| 1.5:1 | 62 | 0.18(.27) | 0.12(0.18) |
| 1:2 | 52 | 0.18(.20) | 0.36(.40) |
| 1:6 | 62 | 0.07(.11) | 0.40(.67) |
| 0:1 | 40 | - | 1.03 |

The results show that the mixtures exhibited marked synergism.

Example 4 Effect of Cyanazine/isoproturon mixtures on wheat

The procedure of Example 2 was repeated on wheat using the following dosages of cyanazine (A) and isoproturon (C).

| | Ratio C:A | Dose level 1 | | Dose level 2 | |
|---|---|---|---|---|---|
| | | C | A | C | A |
| Wheat | 1:0 | 6.00 | - | 1.80 | - |
| | 18:1 | 4.50 | 0.25 | 1.35 | 0.075 |
| | 6:1 | 3.00 | 0.50 | 0.90 | 0.15 |
| | 2:1 | 1.50 | 0.75 | 0.45 | 0.225 |
| | 0:1 | - | 1.00 | - | 0.30 |

The results are as follows. Phytotoxicity was assessed 13 days after treatment.

Table of Results: Example 4

| Ratio C:A | % phytotoxicity |
|---|---|
| 1:0 | 24 |
| 18:1 | 22 |
| 6:1 | 11 |
| 2:1 | 0 |
| 0:1 | 0 |

Because the cyanazine alone showed no phytotoxicity to the wheat, the analysis of $GID_{50}$'s as described in Example 1 is not possible. However, it is clear from the results that there is no adverse reaction between the two compounds.

Claims

1. A herbicidal composition which comprises a compound of the general formula

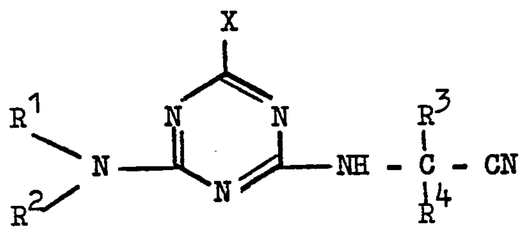

(I)

in which X represents a halogen atom, an alkoxy or alkythio group, an $N_3$ group or a group of formula $NR^5R^6$; each of $R^1$ and $R^2$ independently represents a hydrogen atom or an aralkyl, alkyl or alkenyl group each optionally substituted by one or more of the same or different substituents selected from hydroxy, alkoxy, alkylthio and cyano groups; each of $R^3$ and $R^4$ independently represents an alkyl, alkenyl or aralkyl group, or $R^3$ and $R^4$ together represent an alkylene group; and each of $R^5$ and $R^6$ independently has one of the meanings given for $R^1$ and $R^2$; together with a compound of the general formula

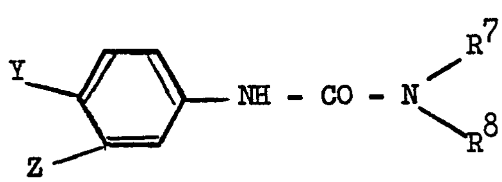

(II)

in which Y represents an alkyl group; Z represents a hydrogen or a halogen atom; $R^7$ represents a hydrogen atom or an alkyl

or alkoxy group; and $R^8$ represents an alkyl group.

2. A composition as claimed in claim 1, in which X represents a halogen atom or a methylthio group.

3. A composition as claimed in either claim 1 or claim 2, in which $R^1$ represents a hydrogen atom or a methyl, ethyl or isopropyl group, and $R^2$ represents a methyl, ethyl or isopropyl group.

4. A composition as claimed in any one of claims 1 to 3, in which each of $R^3$ and $R^4$ independently represents a methyl or ethyl group.

5. A composition as claimed in claim 1, in which X represents a chlorine atom, $R^1$ represents a hydrogen atom, $R^2$ represents an ethyl group and each of $R^3$ and $R^4$ represents a methyl group.

6. A composition as claimed in any one of claims 1 to 5 in which Y represents a methyl ethyl or isopropyl group, and Z represents a hydrogen or chlorine atom.

7. A composition as claimed in any one of claims 1 to 6, in which $R^7$ represents a hydrogen, methyl or methoxy group and $R^8$ represents a methyl group.

8. A composition as claimed in any one of claims 1 to 5, in which each of $R^7$ and $R^8$ represents a methyl group, and either Y represents an isopropyl group and Z represents a hydrogen atom, or Y represents a methyl group and Z represents a chlorine atom.

9. A composition as claimed in any one of claims 1 to 8, which also comprises one or more carriers.

10. A composition as claimed in claim 1, substantially as described in any one of the Examples herein.

11. A method of combating undesired plant growth at a locus, which comprises applying to the locus a compound of the general formula I as defined in any one of claims 1 to 5 and a compound of the general formula II as defined in any one of claims 1 and 6 to 8.

12. A method as claimed in claim 11, in which the compound of general formula I and the compound of general formula II are

applied in the form of a composition as claimed in any one of claims 1 to 10.

13. A method as claimed in either claim 11 or claim 12, in which the locus treated is a crop area bearing plants or seeds of cereals.

European Patent Office

# EUROPEAN SEARCH REPORT

0036679

Application number

EP 81 20 0222

## DOCUMENTS CONSIDERED TO BE RELEVANT

| Category | Citation of document with indication, where appropriate, of relevant passages | Relevant to claim |
|---|---|---|
| X | CH - A - 505 552 (CIBA GEIGY)<br>* Claims; 4th column, lines 16,17 and 28 and 29 *<br>--- | 1-13 |
| X | FR - A - 2 080 809 (CIBA-GEIGY)<br>* Claims; page 4, lines 9, 17 *<br>--- | 1-13 |
| A | US - A - 3 951 641 (S. JAMIAK)<br>* Claims; 6th column, lines 26,27, 40 and 41 *<br>--- | 1-13 |
| A | CH - A - 485 395 (SÜDDEUTSCHE KALKSTICKSTOFF-WERKE A.G.)<br>* The examples and the claims *<br>--- | 1-13 |
| | FR - A - 2 104 767 (DEUTSCHE GOLD- und SILBER-SCHEIDEANSTALT)<br>* Claims; page 2, lines 12-36; page 3, lines 1-28 *<br>--------- | 1-13 |

CLASSIFICATION OF THE APPLICATION (Int. Cl.3)

A 01 N 47/30//
(A 01 N 47/30
43/70)

TECHNICAL FIELDS SEARCHED (Int. Cl.3)

A 01 N 47/30
43/70

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30.06.1981 | MERGONI |

EPO Form 1503.1 06.78